# EUROPÄISCHE PATENTSCHRIFT

(11) **EP 0 609 763 B1**
(45) Veröffentlichungstag und Bekanntmachung des Hinweises auf die Patenterteilung: **08.07.1998**
(21) Anmeldenummer: 94101113.2
(22) Anmeldetag: 26.01.1994
(51) Int. Cl.: G01N 27/36

(54) **pH-Glaselektrode**
PH-glasselectrode
Electrode à PH en verre

(30) Priorität: 04.02.1993 DE 4303186
(43) Veröffentlichungstag der Anmeldung: 10.08.1994
(73) Patentinhaber: HOECHST AKTIENGESELLSCHAFT, 65929 Frankfurt am Main (DE)
(72) Erfinder: Melzer, Werner, Prof. Dr., D-65835 Liederbach (DE)

(56) Entgegenhaltungen:
- WO-A-88/01739
- FR-A- 1 507 117

## Beschreibung

Die Erfindung betrifft eine pH-Glaselektrode, die aus einem doppelwandigen Glasrohr besteht, bei dem zwischen den Wänden des äußeren und inneren Glasrohres eine elektrische Abschirmung vorgesehen ist und das innere Glasrohr an einem Ende mit einem Glasdeckel und am anderen Ende mit einer pH-empfindlichen Glasmembran verschlossen ist, die mit dem Glasrohr einen Hohlraum bildet, der mit Innenpuffer gefüllt ist und in den die Ableitelektrode ragt. Glaselektroden der genannten Art sind bekannt, beispielsweise aus Hellmuth Galster: pH-Messung Grundlagen, Methoden, Anwendungen, Geräte, VCH Verlagsgesellschaft mbH, Weinheim 1990, und aus der GB 667,471.

Während der Meßkettennullpunkt moderner pH-Meßketten weitgehend stabil bleibt, muß die Meßkettensteilheit in gewissen Zeitabständen kalibriert werden. Hierzu werden die Meßketten aus dem Behälter, dem Durchlaufgefäß oder dem Rohr ausgebaut und extern in bekannten Puffern kalibriert. Dabei werden die Meßkettendaten wie Meßkettennullpunkt und Meßkettensteilheit ermittelt und deren Abweichungen am pH-Meter kompensiert. Der Kalibriervorgang kann oft nicht bei Prozeßtemperaturen, sondern nur bei Raumtemperatur durchgeführt werden. Der Aufwand beträgt 1 bis 2 Stunden. Eine häufige Kalibrierung, z.B. zur Steigerung der Meßgenauigkeit muß aus diesem Grund und auch wegen der damit verbundenen Kosten meist unterbleiben.

Es ist ferner bekannt, die Meßketten pneumatisch aus der Meßlösung herauszufahren und mit Spüllösungen und Kalibrierlösungen zu beaufschlagen. Die dabei festgestellten Abweichungen der Meßkettenparameter werden im pH-Meter kompensiert. Solche Vorrichtungen sind relativ aufwendig und teuer. Problematisch ist insbesondere der mit der pneumatischen Bewegung der Meßkette verbundene Verschleiß und die einwandfreie Abdichtung der Meßflüssigkeit, d.h. deren Rückhaltung im Behälter.

Die Erfindung vermeidet diese Nachteile. Die Meßkette verbleibt stets in der fixierten Position der Meßstelle.

Die Erfindung löst die Aufgabe dadurch, daß im inneren Glasrohr eine durch den Deckel geführte Zuleitung und eine durch den Deckel geführte Ableitung für den Innenpuffer angeordnet ist, wobei die Ableitung sich bis zum tiefsten Punkt des Hohlraums erstreckt.

Die mit der Erfindung erzielten Vorteile sind im wesentlichen darin zu sehen, daß sich die Meßkettensteilheit, der wichtigste Parameter, ohne Ausbau der pH-Glaselektrodenmeßkette durch einfachen Austausch des Referenzpuffers innerhalb der Glaselektrode kalibrieren läßt. Die Meßkettensteilheit ist der Quotient aus der Differenz der gemessenen Potentiale bei Pufferaustausch und der Differenz der bekannten pH-Werte der ausgetauschten Innenpuffer 8. Die Kalibrierung findet bei der jeweils vorliegenden Produkttemperatur statt. Der Aufwand für Steuerung bzw. Auswertung des Kalibriervorgangs ist gering.

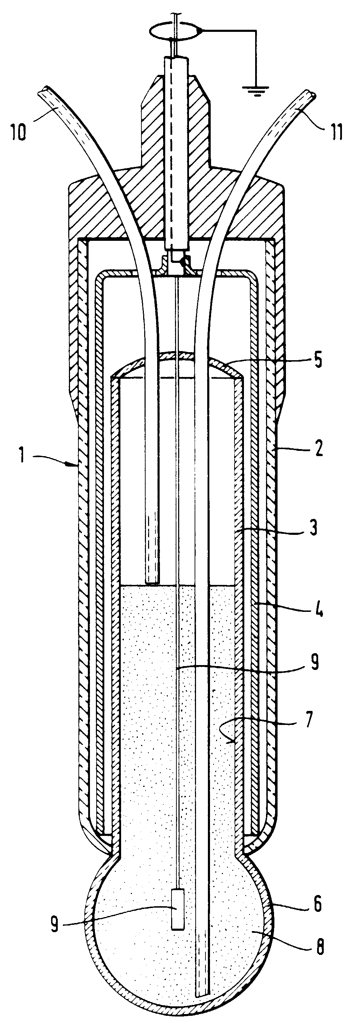

Im folgenden wird die Erfindung anhand der Figur in beispielsweiser Ausführung näher erläutert.

Die pH-Glaselektrode besteht aus einem doppelwandigen Glasrohr 1. Zwischen den Wänden des äußeren Glasrohres 2 und des inneren Glasrohres 3 ist eine elektrische Abschirmung 4 vorgesehen. Das innere Glasrohr 3 ist an einem Ende mit einem Glasdeckel 5 und am anderen Ende mit einer pH-empfindlichen Glasmembran 6 verschlossen, die kugelförmig sein kann. Die Glasmembran 6 bildet mit dem inneren Rohr 3 einen Hohlraum 7 aus, der mit Innenpuffer 8 gefüllt ist und in den die Ableitelektrode 9 ragt. Im inneren Glasrohr 3 ist eine durch den Deckel 5 geführte Zuleitung 10 und eine Ableitung 11 für den Innenpuffer 8 angeordnet, wobei die Ableitung 11 sich bis zum tiefsten Punkt des Hohlraums 7 erstreckt.

## Patentansprüche

1. pH-Glaselektrode bestehend aus einem doppelwandigen Glasrohr, bei dem zwischen den Wänden eine elektrische Abschirmung vorgesehen ist, das innere Glasrohr an einem Ende mit einem Glasdeckel und am anderen Ende mit einer pH-empfindlichen Glasmembran verschlossen ist, die mit dem Glasrohr einen Hohlraum bildet, der mit Innenpuffer gefüllt ist und in den die Ableitelektrode ragt, dadurch gekennzeichnet, daß im inneren Glasrohr (3) eine durch den Deckel (5) geführte Zuleitung (10) und eine durch den Deckel (5) geführte Ableitung (11) für den Innenpuffer (8) angeordnet ist, wobei die Ableitung (11) sich bis zum tiefsten Punkt des Hohlraums (7) erstreckt.

## Claims

1. A pH glass electrode comprising a double-walled glass tube in which an electrical screen is provided between the walls, and the inner glass tube is sealed at one end with a glass lid and at the other end with a pH-sensitive glass membrane which forms, with the glass tube, a cavity which is filled with internal reference solution and into which the reference electrode extends, wherein a feed tube (10) and a drain tube (11) which are passed through the lid (5) and intended for the internal reference solution (8) are disposed in the inner glass tube (3), the drain tube (11) extending down to the lowest point in the cavity (7).

## Revendications

1. Electrode à pH en verre, constituée d'un tube en verre à double paroi entre les parois duquel on a prévu une isolation électrique, et dans lequel le tube interne est fermé à une extrémité par un couvercle en verre et à l'autre extrémité par une membrane en verre sensible au pH formant une cavité avec le tube en verre, laquelle est remplie avec un tampon interne et dans laquelle émerge la borne négative, caractérisée en ce que l'on a disposé, dans le tube en verre interne (3), une borne positive (10) traversant le couvercle (5) et une borne négative (11) traversant le couvercle (5), la borne négative (11) s'étendant jusqu'au fond de la cavité (7).
